# FASCICULE DE BREVET EUROPEEN

(11) **EP 1 623 578 B1**
(45) Date de publication et mention de la délivrance du brevet: **24.07.2013**
(21) Numéro de dépôt: 04760478.0
(22) Date de dépôt: 30.04.2004
(51) Int. Cl.: H04N 21/462, H04N 21/2343, H04N 21/63

(54) **PROCEDE ET SYSTEME POUR SECURISER L EMBROUILLAGE, LE DESEMBROUILLAGE ET LA DISTRIBUTION DE SEQUENCES VISUELLES VECTORIELLES**
VERFAHREN UND SYSTEM ZUR SICHERSTELLUNG EINER SICHEREN VERWÜRFELUNG UND ENTWÜRFELUNG UND VERTEILUNG VEKTORIELLER VISUELLER SEQUENZEN
METHOD AND SYSTEM FOR ENSURING SECURE SCRAMBLING AND DE-SCRAMBLING AND THE DISTRIBUTION OF VECTORAL VISUAL SEQUENCES

(30) Priorité: 02.05.2003 FR 0350140
(43) Date de publication de la demande: 08.02.2006
(73) Titulaire: Querell Data Limited Liability Company, Dover, DE 19904 (US)
(72) Inventeur: LECOMTE, Daniel, F-75116 PARIS (FR); SARDA, Pierre, F-92600 ASNIERES-SUR-SEINE (FR)
(74) Mandataire: Kazi, Ilya
(86) Numéro de dépôt international: PCT/FR2004/050179
(87) Numéro de publication internationale: WO 2004/100552

(56) Documents cités:
- EP-A- 0 920 209
- WO-A-98/42098
- US-B1- 6 233 356

## Description

La présente invention se rapporte au domaine du traitement et de la protection de flux numériques visuels animés, encodés selon un format utilisant des graphiques vectoriels, c'est-à-dire que la surface est définie par sa couleur, sa position et son occupation de l'espace à partir d'une forme prédéfinie ou à partir de formules mathématiques donnant ses limites.

On se propose dans la présente invention de fournir un procédé et un système de sécurisation permettant d'embrouiller visuellement et de recomposer (désembrouiller) le contenu d'un flux visuel contenant des objets synthétiques numériques multidimensionnels décrivant des objets à partir de leur forme, de leur position, de leur couleur, de leur dimension et/ou d'autres paramètres comme le fait par exemple la norme MPEG-4 BIFS (« BInary Format for Scene »).

La présente invention se rapporte plus particulièrement à un dispositif capable de transmettre de façon sécurisée un ensemble de flux visuels de haute qualité en deux ou trois dimensions, animés et encodés selon un format utilisant des graphiques vectoriels vers un écran de télévision et/ou pour être enregistré sur le disque dur d'un boîtier reliant le réseau de télétransmission à l'écran de visualisation tel qu'un écran de télévision ou un moniteur d'ordinateur personnel, tout en préservant la qualité audiovisuelle mais en évitant toute utilisation frauduleuse comme la possibilité de faire des copies pirates de ces flux ou de ces programmes audiovisuels enregistrés sur le disque dur ou tout autre support d'enregistrement du boîtier décodeur. L'invention concerne un système client-serveur et le mécanisme de synchronisation entre ledit serveur qui fournit le flux permettant le visionnage de la séquence visuelle sécurisée et ledit client qui lit et affiche le flux audiovisuel numérique.

Avec les solutions actuelles, il est possible de transmettre des films et des programmes audiovisuels sous forme numérique via des réseaux de diffusion de type hertzien, câble, satellite, etc:.. ou via des réseaux de télécommunication type DSL (Digital Subscriber Line) ou BLR (boucle locale radio) ou via des réseaux DAB (Digital Audio Broadcasting), etc.

Par ailleurs, pour éviter le piratage des oeuvres ainsi diffusées, ces dernières sont souvent cryptées ou brouillées par divers moyens bien connus de l'homme de l'art.

Concernant le traitement de flux audiovisuels constitués d'objets, l'art antérieur connaît l'invention US 6 233 356 B1 « Generalized Scalability for Video Coder Based on Video Objects » qui traite de systèmes d'encodage et de décodage d'objets vidéos de type MPEG-4 divisés en plusieurs couches : une couche de base et au moins une couche d'amélioration. La couche de base contient suffisamment d'information sur l'objet vidéo pour décoder une représentation de base. Les couches dites d'améliorations contiennent des informations pour améliorer la qualité du flux vidéo, en augmentant la résolution dans les domaines spatial et temporel. Cet art antérieur présente une méthode particulière d'encodage et de décodage capable d'encoder et de décoder un flux multicouche MPEG-4. Cette méthode originale d'encodage n'est cependant pas présentée comme pouvant être utilisée pour protéger le flux vidéo original, ni pour embrouiller des objets des séquences visuelles.

Parmi les inventions concernant la distribution sécurisée de flux audiovisuels basée sur le principe client-serveur, l'art antérieur connaît l'invention US 2001/0053222 A1 « Data Processing, Apparatus and Method » qui propose un procédé et un système pour la protection de flux vidéo encodés avec la norme MPEG-4. Le flux audiovisuel est composé de plusieurs objets audio et vidéo, la composition scénique étant décrite par le format BIFS (Binary Format For Scene) et contient également une information IPMP (« Intellectual Property Management and Protection » : protection et gestion de la propriété intellectuelle). De tous les objets visuels contenus dans la scène, seuls les objets vidéo sont protégés. L'art antérieur ne propose pas de protection pour les objets synthétiques, aussi la description de scènes au format BIFS n'est pas sécurisée. La protection est effectuée par une méthode de cryptage à l'aide de quatre clefs. L'objet vidéo encrypté est ensuite multiplexé avec les autres objets vidéo dans un flux numérique envoyé à l'utilisateur. La première clé, spécifique pour chaque utilisateur est encryptée avec une deuxième, le résultat est encrypté avec une troisième clé et à partir de cette combinaison sont générées deux informations de déverrouillage qui sont envoyées à l'utilisateur après identification et autorisation. Cet ensemble résultant est également encrypté avec une quatrième clé, et ce dernier ensemble est multiplexé avec les autres objets dans le flux audiovisuel. La dernière clé est périodiquement mise à jour. Le flux ainsi protégé, la première clé et les deux informations de déverrouillage sont envoyées au préalable à l'équipement destinataire, qui décrypte le flux protégé. L'objet vidéo est reconstitué à l'aide de la quatrième clé régénérée sur l'équipement destinataire à partir des deux informations de déverrouillage, de la première clé, envoyées au préalable, et de la quatrième clé en plus des informations contenues dans la partie IPMP du flux MPEG-4 envoyé à l'utilisateur.

Cependant cette solution ne permet pas de résoudre le problème de la sécurité car la protection du flux vidéo repose sur un système de cryptage à base de clés numériques, mais pour lequel le flux vidéo transmis à un équipement récepteur contient, même sous une forme cryptée, toutes les informations initialement présentes dans le flux vidéo original. Ainsi, le flux vidéo reçu par l'équipement client contient déjà toutes les informations initialement présentes dans le flux vidéo non crypté, même si elles sont stockées sous une forme qui ne permet pas leur utilisation immédiate.

Les techniques de protection connues sont souvent basées sur un système de protection par clé(s), l'utilisateur se trouvant à un moment donné en possession de l'intégralité du flux visuel. Muni de moyens de calcul suffisants, l'utilisateur mal intentionné est donc susceptible d'arriver à retrouver les clés de protection et ainsi reconstituer le flux d'origine, pour la simple raison que l'intégralité de l'information visuelle est présente dans le flux protégé.

A la différence de l'art antérieur, la présente invention propose une solution fiable pour la protection de contenus synthétiques visuels et graphiques générés sur le principe du format BIFS.

A l'inverse de la plupart des systèmes « classiques » de protection, le principe décrit ci-dessous permet d'assurer un haut niveau de protection tout en réduisant le volume d'information nécessaire au décodage.

La protection, réalisée de façon conforme à l'invention, est basée sur le principe de suppression et de remplacement d'informations codant le signal visuel original par une méthode quelconque, soit : substitution, modification, permutation ou déplacement de l'information. Cette protection est également basée sur la connaissance de la structure du flux binaire à la sortie de l'encodeur numérique.

La présente invention concerne d'une manière générale tout flux représentant une animation utilisant des objets multidimensionnels construits à partir de formes prédéfinies ou de formules mathématiques qui décrivent leur forme, ainsi que de leur couleur et de leur position et/ou d'autres paramètres. Certains formats basés sur ce type de description utilisent des primitives de formes prédéfinies telles que « Box » (pour un parallélépipède), « Sphere » et des primitives permettant la création de formes arbitraires.

Ainsi le flux fournit les informations permettant de remplir des emplacements de l'espace d'affichage, plutôt que d'effectuer le remplissage de chaque point de cet espace (comme c'est le cas pour une image Bitmap par exemple). Cette méthode de description d'une scène peut utiliser des objets en deux ou trois dimensions.

De plus, l'invention concerne la description de la scène contenant ces objets multidimensionnels et leur animation. Le flux binaire contient des informations sur les transformations effectuées dans le temps sur ces objets définis comme ci-dessus, afin de réaliser leur animation (translation, rotation, déformation...).

La présente invention concerne également le principe général d'un procédé de sécurisation d'un flux audiovisuel. L'objectif est d'autoriser les services de vidéo synthétique à la demande et à la carte à travers tous les réseaux de diffusion, et l'enregistrement local dans le boîtier décodeur numérique de l'usager, ainsi que la visualisation en direct des canaux ainsi diffusés. La solution consiste à extraire et conserver en permanence à l'extérieur de l'habitation de l'usager, en fait dans le réseau de diffusion et de transmission, une partie du programme audiovisuel enregistré chez le client ou diffusé en direct, cette partie étant primordiale pour visualiser correctement ledit programme audiovisuel sur un écran de télévision ou de type moniteur, mais étant d'un volume très faible par rapport au volume total du programme audiovisuel numérique enregistré chez l'usager ou reçu en temps réel. La partie manquante est transmise via le réseau de diffusion (transmission) au moment de la visualisation dudit programme audiovisuel.

Dans la suite, la description concerne des flux au format MPEG-4 BIFS sans que cela consiste une limite à la portée de la présente invention. Celle-ci s'applique de la même façon à tout format de flux permettant de décrire une scène audiovisuelle animée en utilisant des objets numériques multidimensionnels pour décrire les différentes parties de la scène.

Le procédé de protection objet de la présente invention comporte trois étapes :
* une étape préparatoire consistant à analyser et à modifier au moins une partie du flux visuel original au format MPEG-4 BIFS.
* une étape de transmission
   - d'un flux principal modifié conforme au format du visuel original, constitué par les champs modifiés au cours de l'étape préparatoire et
   - par une voie séparée dudit flux principal, d'une information numérique complémentaire permettant de reconstituer le flux visuel original à partir d'un calcul, sur l'équipement destinataire, en fonction dudit flux principal modifié et de ladite information complémentaire.
* une étape de reconstitution sur l'équipement destinataire du flux visuel original à partir dudit flux principal modifié et de ladite information complémentaire.

Le flux numérique étant séparé en deux parties, la plus grande partie, c'est-à-dire le flux principal modifié, sera donc transmise via un réseau de diffusion large bande classique alors que la partie manquante, c'est-à-dire l'information complémentaire, sera envoyée à la demande via un réseau de télécommunication bande étroite comme les réseaux téléphoniques classiques ou les réseaux cellulaires de type GSM, GPRS ou UMTS ou en utilisant une petite partie d'un réseau de type DSL ou BLR, ou encore en utilisant un sous-ensemble de la bande passante partagée sur un réseau câblé. Le flux audiovisuel est reconstitué sur l'équipement destinataire (décodeur) par un module de synthèse à partir du flux principal modifié et de l'information complémentaire.

Afin de comprendre mieux la présente invention, un système de protection, comprenant un module d'analyse-embrouillage et de désembrouillage basé sur les principes du format numérique MPEG-4 BIFS, est décrit. Le procédé et les concepts ainsi illustrés s'appliquent également à tout flux utilisant des objets multidimensionnels tels que décrits ci-dessus.

Le module d'analyse et d'embrouillage proposé par la présente invention repose sur la substitution par des « leurres » ou sur la modification d'une partie des éléments propres aux noeuds, aux champs, aux routes ou autres composantes décrivant ou faisant partie de la scène MPEG-4 BIFS. Le fait d'avoir enlevé et substitué une partie des données du flux visuel original lors de la génération du flux principal modifié, ne permet pas la restitution dudit flux original à partir des seules données dudit flux principal modifié.

Afin de remédier aux inconvénients de l'art antérieur, la présente invention, selon son acceptation la plus générale, est définie par les revendications 1 et 12.

Selon un mode de réalisation particulier de l'invention, au moins un desdits objets multidimensionnels est un objet défini en deux dimensions. De plus, il est possible qu'au moins un desdits objets multidimensionnels est un objet défini en trois dimensions.

Avantageusement, le format utilisé pour coder lesdites séquences visuelles est le format MPEG-4 BIFS. Dans ce cas, selon un mode de réalisation préféré de l'invention, au moins un des paramètres d'au moins un des noeuds « QuantizationParameter » de la séquence visuelle est modifié ou substitué lors de la phase d'analyse et d'embrouillage. De même, dans le cas de MPEG-4 BIFS et selon la variante de l'invention utilisée, un ou plusieurs champs différents de un ou plusieurs noeuds sont modifiés :
- les champs « Radius » de certains noeuds « Circle » ;
- les champs « Size » de certains noeuds « Rectangle » ;
- les champs « Coord » de certains noeuds « Curve » ;
- les champs « Coord » de certains noeuds « IndexedFaceSet2D »
- les champs « Coord » de certains noeuds « IndexedLineSet2D » ;
- les champs « Radius » de certains noeuds géométriques « Sphere » ;
- les champs « Size » de certains noeuds géométriques « Box » ;
- les champs « bottomRadius » et/ou « height » de certains noeuds géométriques « Cone » ;
- les champs « Radius » et/ou « height » de certains noeuds géométriques « Cylinder ».
- les champs « Coord » et/ou « SFNormalNode » de certains noeuds géométriques « IndexedFaceSet » ;
- les champs « Coord » de certains noeuds géométriques « IndexedLineSet » ;

Enfin, selon une variante de l'invention, au moins une trame Intra gérée par le protocole BIFS-Anim est modifiée.

Selon un mode de réalisation particulier de l'invention, on calcule sur l'équipement destinataire une synthèse d'un flux au format d'origine en fonction du flux principal modifié et de l'information complémentaire.

Avantageusement, les modifications appliquées au flux principal sont parfaitement réversibles (procédé sans perte) et le flux numérique reconstitué à partir du flux principal modifié et de l'information complémentaire est strictement identique au flux original.

Selon une variante de l'invention, la transmission dudit flux principal modifié est réalisée à travers un support matériel distribué physiquement [CD-ROM, DVD, disque dur, carte à mémoire flash].

Selon une autre variante, la transmission de ladite information complémentaire est réalisée à travers un support matériel distribué physiquement [carte à mémoire flash, carte à puce]. Avantageusement, le support matériel [carte à mémoire flash, carte à puce] contient les applications et les algorithmes à utiliser pour la phase de synthèse.

L'invention concerne également un système pour la sécurisation d'un flux vidéo synthétique pour la mise en oeuvre du procédé décrit ci-dessus et qui comporte au moins un serveur multimédia contenant les séquences vidéos synthétiques originales, un dispositif d'analyse du flux visuel original, un dispositif de séparation du flux visuel original en un flux principal modifié et en une information complémentaire, en fonction de ladite analyse, au moins un réseau de télécommunication et au moins un dispositif sur l'équipement destinataire pour la reconstruction du flux visuel en fonction dudit flux principal modifié et de ladite information complémentaire.

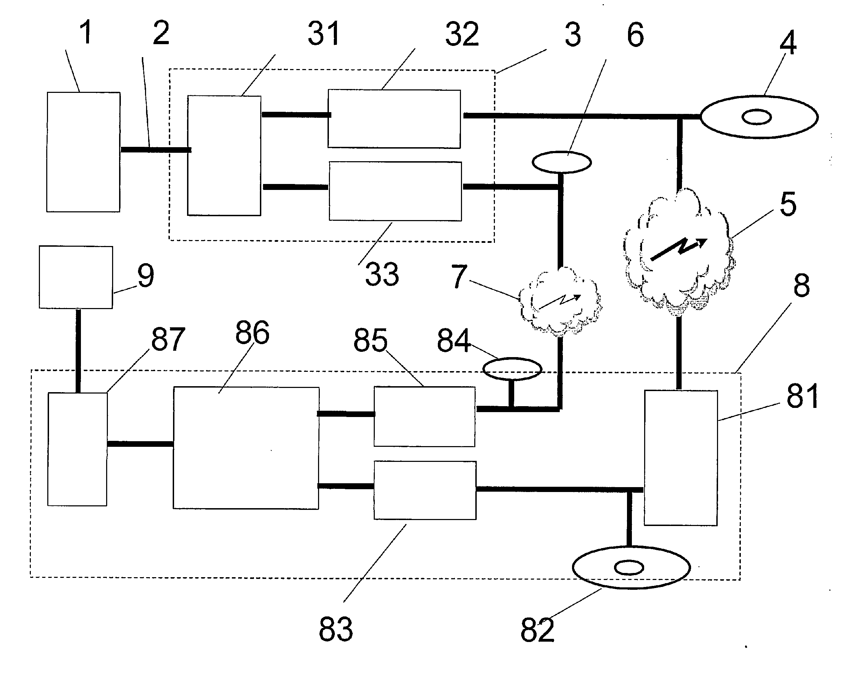

La présente invention sera mieux comprise à la lecture de la description d'un exemple de réalisation préféré, mais non limitatif qui suit, se référant à la figure décrivant l'architecture d'ensemble d'un système pour la mise en oeuvre du procédé selon l'invention. La protection des flux visuels décrite est élaborée en se fondant sur la structure des flux binaires et leurs caractéristiques dues à l'encodage MPEG-4 BIFS. Nous rappelons ci-après cette structure.

Les séquences visuelles numériques de type MPEG-4 BIFS, sont constituées d'au moins un noeud « Transform » contenant ou non un noeud de paramètres de quantification (« QuantizationParameter ») et d'au moins un noeud « Forme » (« Shape ») contenant un champ (« field ») définissant la géométrie de ladite forme (« geometry »), ce champ comprenant un noeud spécifique au type de forme géométrique à afficher, comme par exemple Boîte (« Box ») pour un parallélépipède, Sphère (« Sphere »), Rectangle (pour tracer un rectangle), Cercle (« Circle », pour tracer un cercle) « IndexedFaceSet2D » (pour tracer une surface polygonale définie par les coordonnées des sommets du polygone), et utilisé par tous les décodeurs capables de l'afficher, afin de pouvoir décoder la séquence correctement.

Comme cela est bien connu de l'homme de l'art, la structure de base du format MPEG-4 BIFS hérite directement de VRML (Virtual Reality Modeling Language). La norme VRML contient un certain nombre de noeuds pour représenter les objets dont la scène visuelle est composée, elle construit le graphe de scène, et en décrit le comportement et l'interactivité. Cependant VRML ne supporte pas les graphiques à deux dimensions et n'est pas prévu pour la transmission en mode diffusion en direct (« streaming » ou « broadcasting » en anglais). Les ajouts de MPEG-4 BIFS par rapport à VRML sont le support des graphiques en 2D, les fonctionnalités audio avancées, le protocole de mise à jour de la scène afin de la modifier dans le temps, le protocole d'animation de la scène afin d'animer les objets qui la constituent dans le temps, le modèle temporel, l'encodage binaire, ainsi que des supports spécifiques (pour les objets visuels synthétiques, animation faciale et du corps « Facial and Body Animation », grille « Mesh »). La compression dans le flux binaire permet un gain de place remarquable entre un fichier VRML et son équivalent encodé en MPEG-4 (on atteint au moins un taux de compression de 15 fois). La description scénique MPEG-4 BIFS utilise les noeuds (« Node »), les champs (« Field ») et les événements (« event ») définis dans VRML. De même, le graphe de scène utilise la structure définie dans VRML, ainsi que les mécanismes « DEF » et « USE » pour définir et réutiliser un noeud.

Les graphes de scène en deux dimensions « 2D » sont un cas particulier de scène en trois dimensions « 3D », spécialement ajouté dans MPEG-4 BIFS pour permettre le rendu des scènes 2D, représentations fortement utilisées dans le monde MPEG, les scènes 3D n'étant pas du tout efficaces pour représenter la 2D. La représentation d'animations 2D est basée notamment sur les translations, les rotations, le changement d'échelle et l'ordre de la profondeur des objets les uns par rapport aux autres. La représentation en deux dimensions nécessite de nouveaux noeuds comme « Transform2D » et de nouveaux objets spécifiques tels que par exemple « Circle » ou « Rectangle », non définis par les objets standards en trois dimensions.

L'interactivité et les comportements dans VRML sont gérés à l'aide de capteurs (« sensors ») qui génèrent des événements en fonction d'une action de l'utilisateur ou de la scène à l'aide d'interpolateurs (« interpolators »), qui sont capables de générer des attributs variant dans le temps et dédiés à l'animation, et les Routes (« ROUTEs ») utilisées pour transmettre des événements d'un noeud à un autre. Pour MPEG-4 BIFS, on hérite des interpolateurs de VRML, on utilise les Routes qui connectent des valeurs d'un champ d'un noeud à un champ correspondant d'un autre noeud, et les capteurs sont utilisés pour capter les actions de l'utilisateur.

Les mécanismes de mise à jour d'une scène sont basés sur le fonctionnement en mode de diffusion directe « streamé » d'un flux MPEG-4 BIFS, c'est-à-dire qu'au démarrage de la lecture, une scène initiale est mise en place, mais au fil du temps celle-ci peut être mise à jour par un certain nombre de commandes, définies par le protocole BIFS-Command : Insérer (« Insert »), supprimer (« Delete «) et remplacer (« Replace ») un noeud, un champ indexé ou une Route, ou mettre à jour la scène entièrement (« Upgrade »), pour totalement remplacer la scène actuelle par une nouvelle.

Les animations sont quant à elles gérées par le protocole BIFS-Anim qui est conçu afin de permettre une grande compression des données tout en autorisant l'animation lors de la lecture. Pour animer certains objets grâce à ce protocole, il est nécessaire qu'ils soient définis dans la scène d'origine (par le biais de DEF) et que les masques d'animation (« Animation Mask ») qui contiennent la liste des noeuds et des champs à animer soient définis dans le descripteur de configuration pour le décodeur (« BIFSConfig ») contenu dans le flux élémentaire (« Elementary Stream »). Seuls les champs contenant des valeurs numériques peuvent être animés (tels que par exemple les champs SF/MFInt32, SF/MFFloat, SF/MFColor). Les modifications successives relatives à l'animation sont alors contenues dans les trames d'animation (« Animation Frames », qui forment les Unités d'Accès temporelles, « Access Unit »). A ce niveau, il existe deux modes, « Intra » et Prédictif (« Predictive »). En mode Intra, les valeurs des champs sont obligatoirement quantifiées. En mode prédictif, seules les différences entre la valeur quantifiée courante et la dernière valeur transmise est codée, à l'aide d'un codeur arithmétique adaptatif.

La quantification est utilisée pour améliorer la compression du flux binaire. Elle est utilisée surtout lorsque la scène présente de nombreuses coordonnées (cas des Dessins Animés où chaque surface est dessinée à l'aide de polygones aux sommets plus ou moins nombreux), et est obligatoire dans le cas des trames Intra en BIFS-Anim. Un noeud particulier, le « QuantizationParameter » (QP) est défini et lorsqu'il est utilisé, il permet d'appliquer une quantification soit à tous les noeuds et leurs descendants qui le suivent, soit uniquement au premier noeud qui le suit et à ses descendants. Généralement la quantification appliquée est linéaire entre une valeur minimale et une valeur maximale (valeurs contenues dans le QP). Le QP définit aussi le nombre de bits utilisés pour quantifier toutes les valeurs possibles entre les valeurs minimale et maximale. Ainsi dans le cas d'un Dessin Animé en deux dimensions, fabriqué uniquement à l'aide de polygones, utiliser les QP permet d'obtenir une compression supplémentaire d'un facteur de trois.

La description scénique MPEG-4 BIFS consiste en une collection de noeuds qui décrivent la structure scénique. Les noeuds sont groupés en Types de noeuds de données (« Node Data Types » ou « NDTs »). D'un point de vue notations, on utilise toujours « SF » pour déclarer des champs à valeur simple (« Single Valued Fields ») ou « MF » pour déclarer les champs à valeurs multiples (« Multiple Valued Fields »). Au niveau écriture, on note *variable* [valeur]. Les noeuds sont composés de composants primaires appelés « champs » (« fields »), qui représentent alors les attributs et les interfaces des noeuds.

Un champ a les caractéristiques suivantes :
- Une valeur
- Un type pour cette valeur
- Un type de comportement, qui désigne si le champ est constant (« Field »), modifiable (« exposedField »), s'il est uniquement une source d'événements (« eventOut ») ou uniquement un réceptacle d'événements (« eventIn »).

Ces champs peuvent être quantifiés pour augmenter la compression.

Seulement un noeud d'un sous-ensemble de noeuds est valide à un moment particulier dans le graphe, et par conséquent dans le flux binaire. A chaque noeud correspond un identifiant de noeud (« NodeID ») unique utilisé pour le référencement.

Certains champs sont actifs et émettent des événements (« eventOut »). Ceux-ci sont alors transmis par les Routes. Elles sont composées d'un champ source et d'un champ cible, chacun étant identifié par l'identifiant (« DEF_ID ») du noeud auquel il appartient. Les routes connectent deux champs de même type. Ainsi par le mécanisme des Routes, si une valeur change, alors elle sera aussitôt changée dans le champ cible.

Toute entité qui doit être visible dans une scène doit être attachée à un noeud Forme (« Shape »). Un noeud « Shape » contient deux champs géométrie « Geometry » et apparence « Appearence ». Le champ « Appearence » contient lui-même un noeud Apparence (« Appearance ») qui contient les informations de couleur, remplissage et transparence, ainsi que d'autres attributs concernant l'aspect, ou bien des noeuds spécifiques pour la texture. Le champ « Geometry » contient les informations concernant la forme de l'élément visuel à afficher, comme par exemple « Box », « Sphere », « Rectangle », « Circle », « Curve2D », « IndexedLineSet », « PointSet2D », « IndexedFaceSet », « Cone », « Cylinder ».

Dans le cas général de la 3D, « IndexedFaceSet » sert à afficher une surface tridimensionnelle décrite par ses sommets. Ces derniers sont donnés dans le champ « Coord » qu'il contient. Ce champ est rempli de coordonnées successives (soit des triplets de valeurs pour localiser chaque point de la surface dans un repère en 3D). De plus cette surface contient un champ Normal (« SFNormalNode ») qui contient une liste de vecteurs tridimensionnels utilisés notamment lors du calcul du rendu de l'éclairage sur une telle surface.

Dans le cas particulier de la 2D, à laquelle s'applique préférentiellement cette réalisation, « IndexedFaceSet2D » sert à afficher une surface polygonale plane décrite par ses sommets. Ces derniers sont donnés dans le champ « Coord » qu'il contient. Ce champ est rempli des coordonnées successives (en 2D, valeurs d'abscisse, puis d'ordonnée, successivement). De même, « IndexedLine2D » fonctionne de la même façon, mais ne trace que le trait défini par la succession des coordonnées données, sans fermer la surface polygonale.

Exemple de description textuelle :

```
      Transform2D
       {
          scale 0.5 0.5
          children [
               QuantizationParameter
               {
                    position2DQuant true
                    position2DMin -20.0 -20.0
                    position2DMax 20.0 20.0
                    position2DNbBits 12
                    colorQuant false
                    useEfficientCoding true
               }
               Shape
               {
                    appearance Appearance
                    {
                         material Material2D
                         {
                              emissiveColor 0.8 0.566 0.2
                              filled TRUE
                              transparency 0
                         }
                    }
                    geometry IndexedFaceSet2D
                    {
                         coord Coordinate2D
                         {
                                   point [ 10 -10 10 10
                             -10 10 -10 -10 ]
                         }
                    }
               }
          ]
      }
```

Cet exemple d'une surface 2D créée avec le format MPEG-4 BIFS peut être reproduit avec un format utilisant des graphiques vectoriels (« vector graphics »), c'est-à-dire que la surface est définie par sa couleur, sa position et son occupation de l'espace (à partir d'une forme prédéfinie ou à partir de formules mathématiques donnant ses limites).

De plus, une scène complète MPEG-4 BIFS contiendra de nombreux objets créés de cette manière et composés chacun d'une multitude de points (plus il y a de points plus la précision et la qualité des contours des objets est grande) pour définir chaque sommet des polygones. De plus, une scène MPEG-4 BIFS peut contenir à la fois des objets 3D et des surfaces 2D définis de cette façon.

A partir de cet exemple simple, on voit qu'en changeant quelques valeurs de paramètres directement dans le flux binaire, on perturbe la scène d'origine. Pour embrouiller la scène, on change les valeurs de la couleur, le remplissage de la surface, l'échelle pour réduire ou agrandir le rendu de l'objet multidimensionnel, et finalement on transforme une ou plusieurs valeurs du champ coordonnées pour déformer d'avantage l'objet.

Le flux principal modifié résultant est totalement compatible avec le standard avec lequel le flux d'origine a été généré, mais ne comporte pas la même information visuelle. Pour obtenir une taille minimale de l'information complémentaire, on modifie un nombre limité d'objets multidimensionnels dans le nombre total des objets décrivant des animations évoluées qui contiennent un nombre considérable de points.

Avantageusement, le créateur de contenu utilise les techniques préconisées par la norme ou le standard pour augmenter la compression, c'est-à-dire l'utilisation du noeud « QuantizationParameter » de façon à quantifier notamment les coordonnées. Dans ce cas, transformer les champs du QP (par exemple changer les valeurs minimales: valeurs « position2DMin ») aura pour effet de changer de manière globale la représentation du ou des objets concernées par ce QP. En effet, changer les bornes du quantificateur revient à modifier la représentation, puisque les coordonnées des points sont encodées par rapport à ces bornes. On obtient ainsi un changement d'échelle des objets touchés par cette transformation.

Pour augmenter la dégradation, on modifie également certaines coordonnées, de manière aléatoire par exemple, pour s'assurer que la forme d'origine soit déformée. Cette modification est effectuée pour au moins un objet composant la scène.

Avantageusement, on retrouve dans le flux tous les éléments déjà décrits, et on substitue certaines valeurs numériques par d'autres, tout en assurant la conformité du flux principal modifié au format du flux original.

Un autre exemple de réalisation conforme à l'invention est la modification du champ Rayon (« radius ») d'un noeud géométrique Cercle (« Circle ») pour modifier sa taille. Pour les noeuds géométriques de types Rectangle (« Rectangle »), on modifie le champ Taille (« size ») et on remplace ainsi sa taille d'origine avec une taille calculée ou aléatoire « leurre ». De plus, on modifie le champ Coordonnées («SFCoordinate2DNode») d'un noeud géométrique Courbe (« Curve2D ») pour modifier sa représentation.

Concernant les objets 3D, la modification du champ Rayon (« radius ») d'un noeud géométrique Sphère (« Sphere ») modifie sa taille. Pour les noeuds géométriques de types Parallélépipède (« Box »), on modifie le champ Taille (« size ») et on remplace ainsi sa taille d'origine (triplet de 3 valeurs) avec une taille calculée ou aléatoire « leurre ».

La forme géométrique représentant un cône (« Cone ») sera transformée en modifiant les valeurs du rayon (« bottomRadius ») et de la hauteur du cône (« height ») par des valeurs calculées ou aléatoires « leurres ».

La forme géométrique représentant un cylindre (« Cylinder ») sera transformée en modifiant les valeurs du rayon (« Radius ») et de la hauteur du cylindre (« height ») par des valeurs calculées ou aléatoires « leurres ».

On effectue également la modification du champ Coordonnées d'un noeud géométrique Polygone («IndexedFaceSet» ou «IndexedFaceSet2D» (pour sa représentation en 2D) pour déformer sa représentation. Avantageusement, dans le cas de la 3D, on modifie aussi le champ normal (« SFNormalNode ») afin de modifier les résultats de l'évaluation de l'équation d'éclairage de l'objet ou de tout autre résultat nécessitant l'utilisation du vecteur normal.

Avantageusement la modification porte sur le champ Coordonnées d'un noeud géométrique Ligne Brisée («IndexedLineSet» ou «IndexedLineSet2D» (pour sa représentation en 2D) pour changer sa représentation.

On substitue également par des valeurs calculées ou aléatoires « leurres » les champs Echelle (« Scale »), et/ou Translation (« translation ») et/ou Rotation (« rotation ») d'un noeud « Transform » ou «IndexedLineSet2D» en 2D afin de modifier le rendu visuel lors de l'affichage.

L'invention sera mieux comprise à l'aide de la description, faite ci-après à titre purement explicatif, d'un mode de réalisation préféré et non limitatif de l'invention, en référence à la figure annexée qui illustre un mode de réalisation particulier du système client-serveur selon l'invention.

Le flux d'origine (1) est directement sous forme numérique issu d'un encodeur MPEG-4 BIFS.

Le flux visuel d'origine (1) encodé que l'on souhaite sécuriser est passé via la liaison (2) à un module d'analyse et d'embrouillage (31), qui génère un flux principal modifié (32) au format identique au format du flux d'entrée (1) en dehors de ce que certains des éléments décrivant la scène ont été remplacés par des valeurs différentes de celles d'origine, et est stocké sur le serveur (3). L'information complémentaire (33), de format quelconque, contient des informations relatives aux éléments des séquences qui ont été modifiés, remplacés, substitués ou déplacés, et leur valeur ou emplacement dans le flux original. Ladite information complémentaire (33) est également stockée sur le serveur (3).

Selon un mode de réalisation particulier de l'invention, l'étape d'analyse réalisée par le module (31) est suivie par l'étape d'embrouillage qui consiste à transformer tout noeud « Polygone » en changeant un couple de coordonnées sur 10, par un couple de valeurs aléatoires. Les valeurs d'origine sont stockées dans l'information complémentaire (33).

Selon un autre mode de réalisation, l'analyse réalisée par le module (31) détecte la présence de noeuds « QuantizationParameter » qui définissent les bornes minimale et maximale à utiliser pour appliquer une quantification à l'ensemble des coordonnées des polygones définis. Pour certains noeuds « QuantizationParameter », le module (31) modifie toutes les valeurs des bornes minimale et maximale (soit quatre valeurs entières pour un objet 2D, les valeurs originales étant stockées dans l'information complémentaire), et les remplace par des valeurs « leurres » adaptées et cohérentes, mais éloignées des valeurs originales. On obtient ainsi un effet de distorsion des formes des surfaces polygoniques définies.

Avantageusement, le procédé est appliqué à un flux encodé qui utilise le protocole BIFS-Anim. Dans ce type de flux, les trames Intra sont forcément quantifiées. Le module (31) exerce les modifications dans les champs des QP utilisés dans ces trames Intra. De plus, afin d'assurer une plus grande protection, le module (31) change un certain nombre de surfaces dans les trames Intra. En effet, les trames Prédites sont basées sur les surfaces définies dans les trames Intra. Toute modification des trames Intra entraîne donc un prolongement temporel de la dégradation du fait de ce lien.

Le flux résultant de la transformation (32) est à un format identique au flux original (1).

Le flux principal modifié (32) est ensuite transmis, via un réseau haut débit (5) de type hertzien, câble, satellite, etc..., au terminal de l'utilisateur (8), et est stocké dans une mémoire (81) qui peut être par exemple un disque dur. Lorsque l'utilisateur (8) fait la demande de visionnage de la séquence animée présente dans sa mémoire (81), deux éventualités sont possibles : dans un premier cas, l'utilisateur (8) ne possède pas tous les droits nécessaires pour voir la séquence animée et dans ce cas, le flux d'animation (32) généré par le module d'embrouillage (31) présent dans sa mémoire (81) est passé au système de synthèse (86), via une mémoire tampon de lecture (83), qui ne le modifie pas et le transmet à l'identique à un lecteur capable de le décoder (87) et son contenu, dégradé visuellement par le module d'embrouillage (31), est affiché sur l'écran de visualisation (9).

Dans un second cas, le serveur (3) décide que l'utilisateur (8) possède les droits pour voir la séquence animée. Dans ce cas, le module de synthèse (86) fait une demande de visionnage au serveur (3) contenant l'information complémentaire (33), nécessaire à la récupération de la séquence originale (1). Le serveur (3) envoie alors via des réseaux de télécommunication de type ligne téléphonique analogique ou numérique, DSL (« Digital Subscriber Line ») ou BLR (Boucle Locale Radio), via des réseaux DAB (« Digital Audio Broadcasting ») ou via des réseaux de télécommunications mobiles numériques (GSM, GPRS, UMTS) (7) l'information complémentaire (33), permettant la reconstitution de la séquence originale, de façon à ce que l'utilisateur (8) puisse la stocker dans une mémoire tampon (85). Avantageusement, le réseau (7) peut être du même type que le réseau (5).

Avantageusement, le réseau (7) peut être confondu avec le réseau (5).

Le module de synthèse (86) procède alors à la restauration du flux visuel original à partir du flux principal modifié qu'il lit dans sa mémoire tampon de lecture (83) et de l'information complémentaire lue dans la mémoire tampon (85) qui lui permet de connaître les positions ainsi que les valeurs d'origine des champs modifiés. La séquence reconstituée au format MPEG-4 BIFS est envoyée à une lecteur-décodeur (87) pour ce format. La séquence visuelle originale reconstituée est alors affichée sur l'écran de visualisation (9) de l'utilisateur (8).

Avantageusement, le flux principal modifié (32) est passé directement via un réseau (5) à la mémoire tampon de lecture (83) puis au module de synthèse (86).

Avantageusement, le flux principal modifié (32) est inscrit (enregistré) sur un support physique comme un disque de type CD-ROM, DVD, disque dur, carte à mémoire flash, etc... (4). Le flux principal modifié (32) sera ensuite lu depuis le support physique (4) par le lecteur de disque (82) du boîtier (8) pour être transmis à la mémoire tampon de lecture (83) puis au module de synthèse (86).

Avantageusement, l'information complémentaire (33) est enregistrée sur un support physique (6) de format carte de crédit, constitué par une carte à puce ou une carte mémoire flash. Cette carte (6) sera lue par le lecteur de cartes (84) du dispositif de l'utilisateur (8).

Avantageusement, la carte (6) contient les applications et les algorithmes qui seront exécutés par le système de synthèse (86).

Avantageusement, le dispositif (8) est un système autonome, portable et mobile.

La description ci-dessus n'est pas limitative aux seuls objets 2D ou 3D définis par la norme MPEG-4 BIFS et est étendue à tout format de description graphique et vectorielle utilisant des objets construits à partir de leur forme, position, couleur, dimension et/ou d'autres paramètres les décrivant.

De plus, le concept décrit s'applique à tout noeud défini de la même manière que les exemples de noeuds ci-dessus et contenant au moins un champ destiné à définir la structure de l'objet décrit par le noeud. Ce type de champ a une fonctionnalité similaire à celles définies par les champs « Coord » ou « Color » ou « Translation » ou « Rotation » ou « Scale » de la norme MPEG-4 BIFS.

Avantageusement, le dispositif (3) transforme tout flux représentant une animation vectorielle qui utilise les mêmes principes que ceux mis en place par MPEG-4 BIFS.

Avantageusement, le dispositif (3) modifie tout flux représentant une animation en 3 dimensions. Les principes de fonctionnement de la protection sont les mêmes que pour l'exemple ci-dessus, mais les modifications sont opérées sur des noeuds spécifiques aux formes en trois dimensions (cubes, cônes...). En ce qui concerne les coordonnées, ce ne sont pas des couples de coordonnées mais des triplets de coordonnées qui sont modifiés.

Les exemples cités illustrent le principe des modifications sur un flux binaire dans le but de le protéger et sont applicables à tout flux ayant des caractéristiques similaires.

## Revendications

1. Procédé pour la distribution sécurisée de séquences visuelles comprenant une succession de trames devant être affichées sur un écran (9) d'un utilisateur, ledit procédé comprenant :
- une étape d'analyse d'un flux d'origine (1) comprenant lesdites trames, avant sa transmission à un équipement destinataire (8), pour générer un flux principal modifié (32), présentant un format identique au format du flux d'origine (1) mais où au moins une trame du flux d'origine (1) est modifiée, et une information complémentaire (33) comportant des informations numériques aptes à permettre la reconstruction de ladite au moins une trame modifiée, et
- une étape de transmission dudit flux principal modifie (32) et de ladite information complémentaire (33) de manière séparée vers l'équipement destinataire (8),
**caractérisé en ce que** lesdites séquences visuelles sont des séquences visuelles vectorielles animées à au moins deux dimensions et lesdites trames contiennent au moins un objet géométrique multidimensionnel déterminé par au moins un paramètre ayant une valeur d'origine,
et **en ce que** ladite étape de génération du flux principal modifié est réalisée par suppression et remplacement de la valeur d'origine dudit au moins un paramètre par une valeur différente dans ladite au moins une trame modifiée, tout en assurant la conformité du flux principal modifié au format du flux d'origine, et
la génération de l'information complémentaire est réalisée par génération d'une information complémentaire comportant des informations relatives à le au moins un paramètre et sa valeur d'origine.

2. Procédé pour la distribution sécurisée de séquences visuelles vectorielles à au moins deux dimensions selon la revendication 1, où au moins un objet multidimensionnel est un objet défini en deux dimensions.

3. Procédé pour la distribution sécurisée de séquences visuelles vectorielles à au moins deux dimensions selon la revendication 1, où au moins un objet multidimensionnel est un objet défini en trois dimensions.

4. Procédé pour la distribution sécurisée de séquences visuelles vectorielles à au moins deux dimensions selon la revendication 1, où le format utilisé pour coder lesdites séquences visuelles est le format MPEG-4 BIFS.

5. Procédé pour la distribution sécurisée de séquences visuelles vectorielles à au moins deux dimensions selon la revendications 4, où au moins un des paramètres d'au moins un noeud « QuantizationParameter » d'une desdites séquences visuelles est modifié ou substitué lors de ladite étape d'analyse.

6. Procédé pour la distribution sécurisée de séquences visuelles vectorielles à au moins deux dimensions selon l'une des revendications précédentes, où l'on calcule sur l'équipement destinataire (8) une synthèse d'un flux au format d'origine en fonction dudit flux principal modifié (32) et de ladite information complémentaire (33).

7. Procédé pour la distribution sécurisée de séquences visuelles vectorielles à au moins deux dimensions selon la revendication 6, où les modifications appliquées au flux principal sont parfaitement réversibles et le flux numérique reconstitué à partir du flux principal modifié (32) et de l'information complémentaire (33) est strictement identique au flux original (1).

8. Procédé pour la distribution sécurisée de séquences visuelles vectorielles à au moins deux dimensions selon l'une des revendications précédentes, où la transmission dudit flux principal modifié (32) est réalisée à travers un support matériel distribué physiquement.

9. Procédé pour la distribution sécurisée de séquences visuelles vectorielles à au moins deux dimensions selon l'une des revendications précédentes, où la transmission de ladite information complémentaire (33) est réalisée à travers un support matériel distribué physiquement.

10. Procédé pour la distribution sécurisée de séquences visuelles vectorielles à au moins deux dimensions selon la revendication 9 lorsqu'elle dépend de la revendication 6, où le support matériel contient des applications et des algorithmes à utiliser pour ladite synthèse.

11. Procédé pour la distribution sécurisée de séquences visuelles vectorielles à au moins deux dimensions selon l'une des revendications précédentes, où ledit au moins un paramètre correspond à une couleur, une échelle, une dimension, ou aux coordonnées de points de l'objet.

12. Système pour la sécurisation d'un flux vidéo synthétique comportant au moins un serveur multimédia (3), contenant des séquences visuelles comprenant une succession de trames devant être affichées sur un écran (9) d'un utilisateur, le système comprenant :
- un module d'analyse (31) d'un flux d'origine (1), le module (31) étant configuré pour analyser le flux d'origine comprenant lesdites trames, avant leur transmission à un équipement destinataire (8), et étant configuré pour générer un flux principal modifié (32) présentant un format identique au format du flux d'origine (1) mais où au moins une trame du flux d'origine (1) est modifiée et une information complémentaire (33) comportant des informations numériques aptes à permettre la reconstruction de ladite au moins une trame modifiée, et ledit système comprend :
- des moyens de distribution (5, 7, 6, 4) entre ledit serveur multimedia (3) et l'équipement destinataire (8), configurés pour une transmission séparée à l'équipement destinataire (8) dudit flux principal modifie (32) et de ladite information complémentaire (33), **caractérisé en ce que** ledit module d'analyse (31) est configuré pour l'analyse des séquences visuelles vectorielles animées à au moins deux dimensions où les trames des séquences contiennent au moins un objet géométrique multidimensionnel déterminé par au moins un paramètre ayant une valeur d'origine,
pour générer le flux principal modifié (32) par suppression et remplacement de la valeur d'origine d'au moins un paramètre par une valeur différente dans ladite au moins une trame modifiée, et
pour générer l'information complémentaire par génération d'une information complémentaire comportant des informations relatives à le au moins un paramètre et sa valeur d'origine.

## Patentansprüche

1. Verfahren zum gesicherten Verteilen von visuellen Sequenzen, die eine Folge von auf einem Bildschirm (9) eines Benutzers anzuzeigenden Frames umfassen, wobei das genannte Verfahren Folgendes beinhaltet:
- einen Schritt des Analysierens eines die genannten Frames enthaltenden Quellflusses (1) vor dessen Übertragung zu einem Zielgerät (8) zum Erzeugen eines modifizierten Hauptflusses (32) in einem Format, das mit dem Format des Quellflusses (1) identisch ist, bei dem aber wenigstens ein Frame des Quellflusses (1) modifiziert ist, und eine Zusatzinformation (33), die digitale Informationen enthält, die die Rekonstruktion des genannten wenigstens einen modifizierten Frame zulassen, und
- einen Schritt des Übertragens des genannten modifizierten Hauptflusses (32) und der genannten Zusatzinformation (33) auf getrennte Weise zum Zielgerät (8),
**dadurch gekennzeichnet, dass** die genannten visuellen Sequenzen animierte vektorielle visuelle Sequenzen mit wenigstens zwei Dimensionen sind und die genannten Frames wenigstens ein mehrdimensionales geometrisches Objekt enthalten, das durch wenigstens einen Parameter mit einem Quellwert bestimmt ist,
und dadurch, dass der genannte Schritt des Erzeugens des modifizierten Hauptflusses durch Unterdrücken und Ersetzen des Quellwertes des genannten wenigstens einen Parameters durch einen anderen Wert in dem genannten wenigstens einen modifizierten Frame realisiert wird, unter Gewährleistung der Konformität des modifizierten Hauptflusses mit dem Format des Quellflusses, und
die Erzeugung der Zusatzinformation durch Erzeugen einer Zusatzinformation realisiert wird, die Informationen über den oder wenigstens einen Parameter und seinen Quellwert enthält.

2. Verfahren zum gesicherten Verteilen von vektoriellen visuellen Sequenzen mit wenigstens zwei Dimensionen nach Anspruch 1, wobei wenigstens ein mehrdimensionales Objekt ein in zwei Dimensionen definiertes Objekt ist.

3. Verfahren zum gesicherten Verteilen von vektoriellen visuellen Sequenzen mit wenigstens zwei Dimensionen nach Anspruch 1, wobei wenigstens ein mehrdimensionales Objekt ein in drei Dimensionen definiertes Objekt ist.

4. Verfahren zum gesicherten Verteilen von vektoriellen visuellen Sequenzen mit wenigstens zwei Dimensionen nach Anspruch 1, wobei das zum Codieren der genannten visuellen Sequenzen benutzte Format das MPEG-4 BIFS Format ist.

5. Verfahren zum gesicherten Verteilen von vektoriellen visuellen Sequenzen mit wenigstens zwei Dimensionen nach Anspruch 4, wobei wenigstens einer der Parameter von wenigstens einem "QuantizationParameter"-Knoten von einer der genannten visuellen Sequenzen während des Analyseschritts modifiziert oder substituiert wird.

6. Verfahren zum gesicherten Verteilen von vektoriellen visuellen Sequenzen mit wenigstens zwei Dimensionen nach einem der vorherigen Ansprüche, wobei an dem Zielgerät (8) eine Synthese eines Flusses im Quellformat in Abhängigkeit von dem genannten modifizierten Hauptfluss (32) und der genannten Zusatzinformation (33) berechnet wird.

7. Verfahren zum gesicherten Verteilen von vektoriellen visuellen Sequenzen mit wenigstens zwei Dimensionen nach Anspruch 6, wobei die auf den Hauptfluss angewandten Modifikationen perfekt reversibel sind und der auf der Basis des modifizierten Hauptflusses (32) und der Zusatzinformation (33) wiederhergestellte digitale Fluss mit dem Quellfluss (1) genau identisch ist.

8. Verfahren zum gesicherten Verteilen von vektoriellen visuellen Sequenzen mit wenigstens zwei Dimensionen nach einem der vorherigen Ansprüche, wobei die Übertragung des genannten modifizierten Hauptflusses (32) durch physisch verteilten Hardware-Support realisiert wird.

9. Verfahren zum gesicherten Verteilen von vektoriellen visuellen Sequenzen mit wenigstens zwei Dimensionen nach einem der vorherigen Ansprüche, wobei die Übertragung der genannten Zusatzinformation (33) durch physisch verteilten Hardware-Support realisiert wird.

10. Verfahren zum gesicherten Verteilen von vektoriellen visuellen Sequenzen mit wenigstens zwei Dimensionen nach Anspruch 9 in Abhängigkeit von Anspruch 6, wobei der Hardware-Support Anwendungen und Algorithmen zur Benutzung für die genannte Synthese enthält.

11. Verfahren zum gesicherten Verteilen von vektoriellen visuellen Sequenzen mit wenigstens zwei Dimensionen nach einem der vorherigen Ansprüche, wobei der genannte wenigstens eine Parameter einer Farbe, einem Maßstab, einer Dimension oder Koordinaten von Punkten des Objekts entspricht.

12. System zum Sichern eines synthetischen Videoflusses, das wenigstens einen Multimedia-Server (3) umfasst, enthaltend visuelle Sequenzen, die eine Folge von auf einem Bildschirm (9) eines Benutzers anzuzeigenden Frames umfassen, wobei das System Folgendes umfasst:
- ein Modul (31) zum Analysieren eines Quellflusses (1), wobei das Modul (31) zum Analysieren des die genannten Frames enthaltenden Quellflusses konfiguriert ist, vor deren Übertragung zu einem Zielgerät (8), und konfiguriert zum Erzeugen eines modifizierten Hauptflusses (32) in einem Format, das mit dem Format des Quellflusses (1) identisch ist, wobei aber wenigstens ein Frame des Quellflusses (1) modifiziert ist und eine Zusatzinformation (33) digitale Informationen enthält, die die Rekonstruktion des genannten wenigstens einen modifizierten Frame zulassen, wobei das genannte System Folgendes umfasst:
- Mittel (5, 7, 6, 4) zum Verteilen zwischen dem genannten Multimedia-Server (3) und dem Zielgerät (8), konfiguriert für eine getrennte Übertragung zum Zielgerät (8) des genannten modifizierten Hauptflusses (32) und der genannten Zusatzinformation (33), **dadurch gekennzeichnet, dass** das genannte Analysemodul (31) zum Analysieren von animierten vektoriellen visuellen Sequenzen mit wenigstens zwei Dimensionen konfiguriert ist, wobei die Frames von Sequenzen wenigstens ein mehrdimensionales geometrisches Objekt enthalten, das durch wenigstens einen Parameter mit einem Quellwert bestimmt wird,
zum Erzeugen des modifizierten Hauptflusses (32) durch Unterdrücken und Ersetzen des Quellwertes von wenigstens einem Parameter durch einen anderen Wert in dem genannten wenigstens einen modifizierten Frame, und
zum Erzeugen der Zusatzinformation durch Erzeugen einer Zusatzinformation, die Informationen über den oder wenigstens einen Parameter und seinen Quellwert beinhaltet.

## Claims

1. A method for secured distribution of visual sequences comprising a succession of frames to be displayed on a screen (9) of a user, the method comprising:
- a stage of analysing an original stream (1) comprising said frames prior to its transmission to addressee equipment (8) to generate
a modified main stream (32) having a format the same as the format of the original stream (1) but of which at least one frame is modified, and
complementary information (33) comprising digital information suitable for permitting reconstruction of said at least one modified frame; and
- a stage of transmitting said modified main stream (32) and said complementary information (33) separately to the addressee equipment (8),
**characterized in that**
said visual sequences are animated vector visual sequences having at least two dimensions and **in that**
said frames comprise at least one multidimensional geometric object defined by least one parameter having an original value, and **in that**
said stage of generating the modified main stream (32) comprises deleting and replacing the original value of said at least one parameter by a different value for said at least one modified frame, ensuring that the modified main stream has a format the same as the format of the entering stream,
and the generating of the complementary information is performed by generating a complementary information which comprises information relative to the said at least one parameter and its original value.

2. The method for secured distribution of vector visual sequences having at least two dimensions according to claim 1, wherein said at least one multidimensional object is defined in two dimensions.

3. The method for secured distribution of vector visual sequences having at least two dimensions according to claim 1, wherein said at least one multidimensional object is defined in three dimensions.

4. The method for secured distribution of vector visual sequences having at least two dimensions according to claim 1, wherein the format used for coding the visual sequences is MPEG-4 BIF format.

5. The method for secured distribution of vector visual sequences having at least two dimensions according to claim 4, wherein at least one of said "QuantizationParameter" nodes of the visual sequence is modified or substituted during the analysis step.

6. The method for secured distribution of vector visual sequences having at least two dimensions according to any preceding claim, wherein a synthesis of a stream in the original format is calculated on the addressee equipment (8) as a function of the modified main stream (32) and of the complementary information (33).

7. The method for secured distribution of vector visual sequences having at least two dimensions according to claim 6, wherein the modifications applied to the main stream are perfectly reversible and the digital stream reconstituted from the modified main stream (32) and the complementary information (33) is the same as the original stream (1).

8. The method for secured distribution of vector visual sequences having at least two dimensions according to any preceding claim, wherein the transmission of the main modified stream (32) is realised via a physically distributed support material.

9. The method for secured distribution of vector visual sequences having at least two dimensions according to any preceding claim, wherein the transmission of the complementary information (33) is realised via a physically distributed support material.

10. The method for secured distribution of vector visual sequences having at least two dimensions according to claim 9 when dependent on claim 6, wherein the support material contains applications and algorithms to be used for the synthesis phase

11. The method for secured distribution of vector visual sequences having at least two dimensions according to any preceding claim, whereinsaid at least one parameter corresponds to a color, a scale, a dimension, or coordinates of points of the object.

12. A system for securing a synthetic video stream comprising at least one multimedia server (3) containing visual sequences comprising a succession of frames to be shown on a computer screen (9) of a user, the system comprising:
an analysis module (31) of the original stream (1), the analysis module (31) being configured for analysing the original stream (1) comprising said frames prior to its transmission to addressee equipment (8), and being configured to generate a main modified stream (32) having a format the same as the format of the original stream (1) but of which at least one frame is modified, and complementary information suitable for permitting reconstruction of said at least one modified frame;and
distribution means (5, 7, 6, 4) between said multimedia server (3) and said addressee equipment (8), for separate transmission to the addressee equipment (8) of said main modified stream (32) and said complementary information (33),
**characterised in that** said analysis module (31) is configured to analyse animated vector visual sequences having at least two dimensions, wherein said frames comprise at least one multidimensional geometric object defined by at least one parameter having an original value, for generating
the main modified stream (32) by deletion and replacement of the original value of at least one of the at least one parameter by a different value in said at least one modified frame, and for generating
the complementary information by generating a complementary information which comprises information relative to the said at least one parameter and its original value.
